# EUROPÄISCHE PATENTSCHRIFT

(11) **EP 0 391 508 B1**
(45) Veröffentlichungstag und Bekanntmachung des Hinweises auf die Patenterteilung: **12.01.1994**
(21) Anmeldenummer: 90250082.6
(22) Anmeldetag: 26.03.1990
(51) Int. Cl.: C02F 1/02, F24D 19/10

(54) **Verfahren zum Desinfizieren einer Brauchwasseranlage.**
Utility water plant disinfecting process.
Procédé pour désinfecter une installation d'eau de consommation.

(30) Priorität: 06.04.1989 AT 805/89; 17.04.1989 AT 902/89
(43) Veröffentlichungstag der Anmeldung: 10.10.1990
(73) Patentinhaber: Joh. Vaillant GmbH u. Co., 42810 Remscheid (DE); n.v. Vaillant s.a., 1620 Drogenbos (BE); VAILLANT S.A.R.L, 94537 Rungis Cedex (FR); VAILLANT Ges.m.b.H, 1233 Wien (AT); Vaillant Ltd., Rochester Kent ME2 4EZ (GB); Vaillant B.V., 1105 BJ Amsterdam (NL); Vaillant GmbH, 8953 Dietikon 1 (CH)
(72) Erfinder: Bechem, Herbert, D-5600 Wuppertal 23 (DE); Tenhumberg, Jürgen, Dr., D-5608 Radevormwald (DE)
(74) Vertreter: Heim, Johann-Ludwig, Dipl.-Ing.

(56) Entgegenhaltungen:
- EP-A- 0 059 816
- EP-A- 0 270 993
- WO-A-89/03807
- WO-A-90/02707
- DE-A- 3 128 359
- DE-A- 3 525 990
- DE-U- 8 814 968
- DE-U- 8 903 316
- FR-A- 2 379 033
- GB-A- 2 146 797

## Beschreibung

Die Erfindung betrifft ein Verfahren zum Desinfizieren einer Brauchwasseranlage mit einer eine Umlaufpumpe aufweisenden ZirKulationsleitung, wobei das Brauchwasser innerhalb einer vorbestimmten Mindestdauer auf eine keimtötende Mindesttemperatur erhitzt und mittels der Umlaufpumpe umgepumpt wird.

Aus der EP-OS 270 993 ist ein Entkeimungsverfahren für einen Brauchwasserspeicher mittels Erwärmung und Zirkulation bekanntgeworden. Die Wärmeenergie wird dabei zeitlich und temperaturmäßig gesteuert zugeführt. Als Wärmequelle kann eine direkte Beheizung als auch eine indirekte Beheizung, beispielsweise über eine Heizkreiskoppelung, dienen. Nachteilig bei dieser Anlage ist, daß die Brauchwassertemperatur innerhalb des Speichers auch nach dem Entkeimungsvorgang beziehungsweise dem Desinfizieren des Brauchwassers unnötig hoch bleibt. Die gespeicherte Wärmeenergie wird im allgemeinen durch das Zapfen von Brauchwasser nicht ausgenutzt.

Es ist Aufgabe der Erfindung, den im Anschluß an das Desinfizieren der Brauchwasseranlage im Brauchwasser gespeicherten Energieüberschuß zu verwerten.

Erfindungsgemäß wird diese Aufgabe dadurch gelöst, daß das Brauchwasser im Anschluß an die Desinfizierung zwecks Abgabe der in ihm enthaltenen überschüssigen Wärme bis zu seiner Abkühlung auf eine zu seiner Speicherung geeignete niedrigere Soll-Temperatur in Wärmeaustausch mit Heizwasser eines Heizkreises gebracht wird.

Auf diese Weise wird die überschüssige Wärme nutzbringend verwertet, wobei diese Verwertung vorteilhafterweise wesentlich erleichtert wird, wenn der Brauchwasserspeicher indirekt vom Heizkessel einer Heizungsanlage beheizt wird. In diesem Fall können - bei einer Wärmeanforderung im Heizkreis am Ende eines Desinfektionsvorganges - zur Abgabe der überschüssigen Wärme des Brauchwassers jene Wärmetauscher und jene Umlaufpumpen herangezogen werden, die primär zur Aufheizung des Brauchwassers bestimmt sind.

Demnach eignet sich das erfindungsgemäße Verfahren insbesondere zum Desinfizieren einer Brauchwasseranlage mit einem Brauchwasserspeicher, der über einen Ladekreis mit dem von einem Heizkessel beheizbaren Heizwasser des Heizkreises indirekt beheizbar ist, wobei im Heizkreis und im Ladekreis Umlaufpumpen angeordnet sind. Im Falle einer Wärmeanforderung im Heizkreis am Ende eines Desinfektionsvorganges in der Brauchwasseranlage ist dann zur Wärmerückgewinnung bloß sowohl das Brauchwasser in der Zirkulationsleitung als auch das Heizwasser im Heizkreis und im Ladekreis des Brauchwasserspeichers in Umlauf zu versetzen, und zwar so lange, bis sich das Brauchwasser auf die gewünschte Bevorratungstemperatur abgekühlt hat.

Nunmehr folgt ein Ausführungsbeispiel der Erfindung:

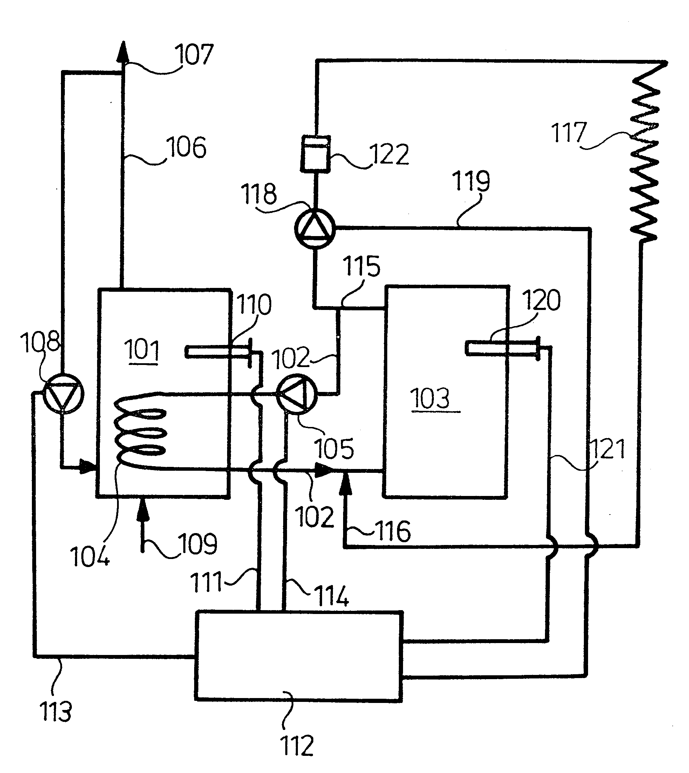

Die einzige Zeichnungsfigur stellt das Schema einer Brauchwasseranlage dar, deren beheizbarer Speicher 101 zwecks indirekter Beheizung einem Ladekreis 102 eines Heizkessels 103 angeschlossen ist. Dieser Ladekreis 102 speist einen im Brauchwasserspeicher 101 angeordneten, zum Beispiel aus einer Rohrwendel 104 bestehenden Wärmetauscher und enthält eine Umlaufpumpe 105.

Der Brauchwasserspeicher 101 wird über eine Kaltwasserzufuhrleitung 109 gespeist und ist mit einem Thermostaten 110 bestückt, der über eine Steuerleitung 111 mit einer allgemeinen Steuerung 112 des Systems verbunden ist, an die auch der Antrieb einer Umlaufpumpe 108 über eine Steuerleitung 113 und der Antrieb der Umlaufpumpe 105 über eine Steuerleitung 114 anschließt. Ausgangsseitig des Brauchwasserspeichers 101 ist eine Zirkulationsleitung 106 vorgesehen, an die wenigstens eine Zapfstelle 107 angeschlossen ist. Der bereits erwähnte Ladekreis 102 des Brauchwasserspeichers 101 ist dem Vorlauf 115 und dem Rücklauf 116 des Heizkessels 103 angeschlossen, die gemeinsam den über einen Raumheizkörper 117 geführten Heizkreis bilden, in dem gleichfalls eine Umlaufpumpe 118 vorgesehen und über eine Steuerleitung 119 mit der allgemeinen Steuerung 112 Verbunden ist.

Auch dieser Heizkessel 103 ist mit einem Thermostaten 120 bestückt, von dem eine Steuerleitung 121 zur allgemeinen Steuerung 112 führt. Im Heizkreis 115 bis 116 befindet sich ferner ein Rückschlagventil 122.

Die Funktion dieses Systems ergibt sich im Sinne der Erfindung im Falle einer Desinfektion der Brauchwasseranlage wie folgt:

Nach dem eigentlichen Desinfektionsvorgang, bei dem das Speicherwasser im Brauchwasserspeicher 101 vorübergehend auf eine keimtötende Temperatur oberhalb 70 °C erhitzt und zum Spülen der Zirkulationsleitung 106 und des Brauchwasserspeichers 101 herangezogen wurde, soll die Temperatur des Brauchwassers wieder auf seine der Speicherung und dem Verbrauch günstige niedrigere Soll-Temperatur abgesenkt werden.

Um nun - sofern zu diesem Zeitpunkt des Desinfektionsendes im Heizkreis 115 bis 116 eine Wärmeanforderung vorliegt - die im Brauchwasser enthaltene überschüssige Wärme im Zuge seiner Abkühlung wiederzugewinnen und zu nutzen sowie dem Heizkreis zuzuführen, ist erfindungsgemäß vorgesehen, den Umlauf des Wassers im Zirkulationskreis 106, im Ladekreis 102 und im Heizkreis 115, 166 so lange aufrechtzuerhalten, bis sich das Brauchwasser im Brauchwasserspeicher 101 auf seine Soll-Temperatur abgekühlt hat.

Dieser Vorgang und seine Dauer können problemlos von der allgemeinen Steuerung überwacht werden, der sowohl die Temperatur des Brauchwassers im Speicher 101, als auch die Temperatur des Heizkesselvorlaufes 115 übermittelt wird und der die Steuerung der Umlaufpumpen 105, 108 und 118 obliegt.

Demnach erfordert die Durchführung des erfindungsgemäßen Verfahrens keinen zusätzlichen Aufwand hinsichtlich der Ausbildung des Systems, sondern lediglich eine zielführende Gestaltung der allgemeinen Steuerung 112.

## Patentansprüche

1. Verfahren zum Desinfizieren einer Brauchwasseranlage mit einer eine Umlaufpumpe aufweisenden Zirkulationsleitung, wobei das Brauchwasser innerhalb einer vorbestimmten Mindestdauer auf eine keimtötende Mindesttemperatur erhitzt und mittels der Umlaufpumpe umgepumpt wird, dadurch gekennzeichnet, daß das Brauchwasser im Anschluß an die Desinfizierung zwecks Abgabe der in ihm enthaltenen überschüssigen Wärme bis zu seiner Abkühlung auf eine zu seiner Speicherung geeignete niedrigere Soll-Temperatur in Wärmeaustausch mit Heizwasser eines Heizkreises gebracht wird.

2. Verfahren nach Anspruch 1 mit einem Brauchwasserspeicher, der über einen Ladekreis mit dem von einem Heizkessel beheizbaren Heizwasser des Heizkreises indirekt beheizbar ist, wobei im Heizkreis und im Ladekreis Umlaufpumpen angeordnet sind, dadurch gekennzeichnet, daß im Falle einer Wärmeanforderung im Heizkreis am Ende eines Desinfektionsvorganges sowohl das Brauchwasser in der Zirkulationsleitung als auch das Heizwasser im Heizkreis und im Ladekreis des Brauchwasserspeichers in Umlauf versetzt wird.

## Claims

1. A process of disinfecting a tap water heating plant comprising a circulating line, which includes a circulating pump, wherein the tap water is heated to a germicidal minimum temperature within a predetermined minimum time and is circulated by the circulating pump, characterized in that after the disinfecting operation the tap water is subjected to a heat exchange with heating water of a room-heating circuit until the tap water has been cooled to a desired lower temperature which is suitable for the storage of the hot tap water.

2. A process according to claim 1 carried out in conjunction with a hot tap water accumulator which is adapted to be indirectly heated by the room-heating water, which is heatable by a heating boiler and conducted in the room-heating circuit, and circulating pumps, which are included in the room-heating circuit and in the charging circuit, characterized in that in case of a heat demand in the room-heating circuit at the end of a disinfecting operation in the tap water heating plant the hot tap water in the circulating line and the room-heating water in the room-heating circuit and in the charging circuit associated with the hot tap water heater is circulated.

## Revendications

1. Procédé pour la désinfection d'une installation d'eau sanitaire comprenant une conduite avec une pompe de circulation, l'eau sanitaire étant chauffée à une température minimale à effet germicide pendant une durée mini déterminée et refoulée par la pompe de circulation, caractérisé par le fait qu'il y a échange de chaleur entre l'eau sanitaire et l'eau d'un circuit de chauffage pour ramener, après la désinfection, sa température élevée à une température de consigne plus basse appropriée pour son accumulation.

2. Procédé suivant la revendication 1, avec un accumulateur d'eau qui est chauffé indirectement, par l'intermédiaire d'un circuit secondaire, par l'eau du circuit de chauffage alimenté par une chaudière, aussi bien le circuit de chauffage que le circuit secondaire comportant des pompes de circulation, caractérisé par le fait qu'en cas d'appel de chaleur dans le circuit de chauffage à la fin d'une désinfection, aussi bien l'eau sanitaire dans la conduite respective que l'eau chaude dans le circuit de chauffage et dans le circuit secondaire de l'accumulateur sont mises en circulation.
